# FASCICULE DE BREVET EUROPEEN

(11) **EP 1 210 522 B1**
(45) Date de publication et mention de la délivrance du brevet: **08.12.2004**
(21) Numéro de dépôt: 00960765.6
(22) Date de dépôt: 31.08.2000
(51) Int. Cl.: F16C 11/12

(54) **PIVOT A LAMES FLEXIBLES**
BLATTFEDERGELENK
PIVOT WITH FLEXIBLE BLADES

(30) Priorité: 31.08.1999 FR 9910927
(43) Date de publication de la demande: 05.06.2002
(73) Titulaire: CENTRE NATIONAL D'ETUDES SPATIALES, 75001 Paris (FR); BE SYSTEM ETUDES CAO REALISATIONS, 06210 Mandelieu (FR)
(72) Inventeur: LORIGNY, Eric, Pascal, Jean, F-31460 Beauville (FR); MEIZEL, Eric, Lionel BE System, F-06210 Mandelieu (FR)
(74) Mandataire: Gaillarde, Frédéric
(86) Numéro de dépôt international: PCT/FR2000/002407
(87) Numéro de publication internationale: WO 2001/016497

(56) Documents cités:
- EP-A- 0 459 057
- FR-A- 2 446 952
- GB-A- 2 156 899
- US-A- 2 757 050
- US-A- 3 181 851
- US-A- 4 536 042

## Description

La présente invention est relative à un pivot à liaisons flexibles comprenant des première et deuxième pièces identiques partiellement engagées l'une dans l'autre et mobiles en rotation l'une par rapport à l'autre autour d'un axe commun, contre l'action d'au moins une lame de ressort de rappel présentant des première et deuxième extrémités ancrées dans lesdites première et deuxième pièces respectivement.

Des pivots de ce type sont utilisés dans de nombreuses applications où un appareil ou organe est monté de manière à être mobile en rotation dans un angle de rotation de faible ouverture, sous force de rappel. A titre d'exemple de tels appareils ou organes on peut citer des aiguilles indicatrices d'instruments de mesure, des miroirs oscillants, des plateaux de balances, etc. etc...

On connaît en particulier du brevet français n° 2 199 370 un tel pivot comprenant deux manchons identiques axialement alignés, chaque manchon présentant un prolongement conçu pour se loger dans une partie évidée de l'autre manchon. Deux lames flexibles croisées couplent élastiquement les deux manchons qui peuvent tourner l'un par rapport à l'autre d'un petit angle, contre l'action de forces de rappel exercées par les lames sur ces manchons. Les lames sont ancrées dans des gorges axiales formées dans les deux manchons.

Pour retenir ces lames dans ces gorges, on peut utiliser la soudure, si les matériaux constituant les lames et le manchon sont métalliques. Cependant, le chauffage de la lame qui intervient pendant la soudure a pour effet de dégrader de manière incontrôlable les caractéristiques mécaniques des lames, notamment quand celles-ci sont très fines, comme c'est le cas quand le pivot est utilisé pour le montage d'un organe mécanique délicat tel qu'une aiguille indicatrice par exemple. La position d'équilibre ou de repos de l'organe supporté peut en être faussée et la fiabilité du montage altérée.

On peut aussi utiliser un produit adhésif pour fixer les lames dans les gorges. Les caractéristiques physiques et chimiques des produits adhésifs s'altèrent malheureusement dans le temps ou du fait de caractéristiques de l'environnement (vide, températures extrêmes) comme c'est le cas, notamment, dans l'espace.

La présente invention a précisément pour but de réaliser un pivot à liaisons flexibles du type décrit en préambule de la présente description, qui ne présente pas les inconvénients mentionnés ci-dessus.

On atteint ce but de l'invention, ainsi que d'autres qui apparaîtront à la lecture de la description qui va suivre, avec un pivot à liaisons flexibles comprenant des première et deuxième pièces identiques partiellement engagées l'une dans l'autre et mobiles en rotation l'une par rapport à l'autre autour d'un axe commun contre l'action d'au moins une lame de ressort de rappel présentant des premières et deuxièmes extrémités ancrées dans lesdites première et deuxième pièces.

Suivant un mode de réalisation de la présente invention, chacune des extrémités de ladite lame est coincée dans un logement axial prévu dans une desdites pièces, entre une partie de paroi dudit logement et une paire de coins superposés, serrés entre une autre partie de paroi dudit logement et ladite lame.

D'autres caractéristiques et avantages de la présente invention apparaîtront à la lecture de la description qui va suivre et à l'examen du dessin annexé dans lequel :
- la figure 1 est une vue perspective d'un premier mode de réalisation du pivot non-revendiqué, à deux lames flexibles,
- la figure 2 est une vue avec arrachement partiel du pivot de la figure 1, révélant sa structure interne, et
- la figure 3 est une vue éclatée d'un deuxième mode de réalisation non-revendiqué, comportant trois lames flexibles, et
- la figure 4 est une vue éclatée d'un mode de réalisation de l'invention,
- la figure 5 est une vue avec arrachement partiel, du mode de réalisation de la figure 4, après assemblage, et
- la figure 6 représente un détail du mode de réalisation des figures 4 et 5.

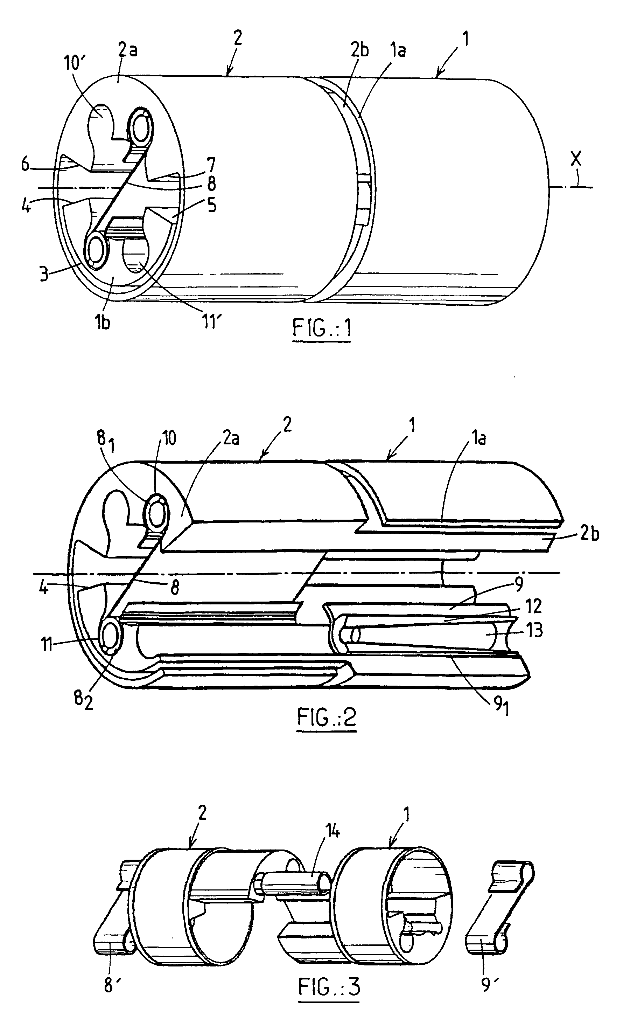

On se réfère à la figure 1 du dessin annexé où il apparaît que le mode de réalisation représenté du pivot comprend des première et deuxième pièces 1,2 respectivement, identiques et partiellement glissées l'une dans l'autre de manière à former ensemble un pivot sensiblement cylindrique de révolution propre à autoriser une rotation d'une des deux pièces par rapport à l'autre, autour de l'axe X du pivot.

La pièce 1 est formée de deux parties 1a, 1b dans le prolongement l'une de l'autre, suivant l'axe X. La partie 1a présente une surface extérieure cylindrique de révolution et elle est creusée d'un évidement sensiblement hémi-cylindrique. La partie 1b prend la forme d'un pied de forme extérieure sensiblement hémi-cylindrique.

La pièce 2 est formée de parties 2a,2b de géométries identiques à celles des parties 1a,1b de la pièce 1.

Comme représenté à la figure 1, les pièces 1 et 2 sont glissées axialement l'une dans l'autre de manière que le pied 1b,2b de l'une soit logé dans l'évidement sensiblement hémi-cylindrique de la partie 2a,1a de l'autre, respectivement.

Comme cela apparaît aussi sur la figure 1, le pied 1b de la pièce 1 présente une surface cylindrique de révolution 3 de rayon légèrement inférieur à celui de l'évidement de la pièce 2a et deux surfaces axiales planes 4,5 s'étendant parallèlement à l'axe X sur toute la hauteur du pied 1b. Ces surfaces 4,5 sont conçues pour coopérer avec des surfaces semblables 6,7 formées dans l'évidement de la partie 2a pour jouer le rôle de butées définissant le débattement angulaire maximal des pièces 1,2 l'une par rapport à l'autre.

Les pivots à lames flexibles sont en effet utilisés essentiellement pour supporter des organes soumis à des rotations de faible amplitude angulaire, tels que par exemple un miroir oscillant commandant le balayage d'une surface par un pinceau lumineux. Les surfaces de butée 4,5,6,7 permettent de définir avec précision les limites de telles rotations.

Comme on l'a vu plus haut, le pied 1b de la pièce 1 et l'évidement creusé dans la partie 2a de la pièce 2 sont sensiblement hémi-cylindriques et non rigoureusement hémi-cylindriques, les surfaces 4,5 d'une part et 6,7 d'autre part ne pouvant être comprises dans un même plan passant par l'axe X et leur inclinaison l'une sur l'autre définissant l'amplitude de leur rotation relative autorisée.

Bien entendu, le pied 2b de la pièce 2 est conformé comme le pied 1b de la pièce 1. Il en est de même des parties 2a et 1a des pièces 2 et 1, respectivement.

Deux lames de ressort 8 et 9, plus complètement visibles sur la vue avec arrachement partiel de la figure 2, couplent les pièces 1 et 2. C'est ainsi que la lame 8 est montée entre le pied 1b de la pièce 1 et la partie 2a de la pièce 2 alors que la lame 9 est montée entre le pied 2b de la pièce 2 et la partie 1a de la pièce 1. Les plans des lames 8 et 9 sont axiaux et croisés, de préférence perpendiculairement l'un à l'autre.

Les lames 8 et 9 présentent des extrémités conformées en boucle ouverte 8₁,8₂ et 9₁,9₂ respectivement, pour s'engager dans des logements cylindriques axiaux complémentaires creusés dans les pièces qu'elles couplent. C'est ainsi que, comme représenté à la figure 2, les extrémités bouclées 8₁,8₂ de la lame 8 sont glissées dans des logements 10,11 creusés respectivement dans la partie 2a de la pièce 2 et dans le pied 1b de la pièce 1. La lame 9 est agencée de manière analogue, l'une de ses extrémités étant prises dans le logement axial 10' et l'autre dans le logement axial 11'. On notera incidemment que les logements axiaux 10,11 et 10',11' s'étendent d'un bout à l'autre du pivot, pour faciliter la fabrication des pièces 1,2.

On comprend qu'une rotation d'une des pièces 1,2 par rapport à l'autre a pour effet de fléchir les lames de ressort 8,9 qui appliquent alors aux pièces dont elles sont solidaires un couple de rappel vers une position angulaire de repos, pour laquelle les lames ne subissent aucun effort de flexion.

Bien qu'en principe le pivot pourrait ne comprendre qu'une seule lame de ressort, on préfère utiliser un agencement à deux lames assurant une compensation des dérives qui pourraient affecter à la longue la raideur de ces lames, et procurant un meilleur guidage axial par la rigidité radiale mieux équilibrée qu'un tel agencement procure.

Suivant une caractéristique importante, les extrémités bouclées des lames 8,9 sont ancrées, dans les pièces qu'elles couplent, par coincement. Comme cela apparaît plus clairement sur la figure 2, sur la vue avec arrachement partiel de l'extrémité bouclée 9₁ de la lame 9, ce coincement est obtenu au moyen d'une bague cylindrique fendue 12 et d'un axe conique 13, glissés successivement dans cette extrémité bouclée après l'installation de celle-ci dans le logement axial prévu pour le recevoir dans la pièce 2.

Le diamètre de la bague fendue 12 est choisi pour permettre son insertion dans l'extrémité bouclée 9₁. La bague 12 présente une conicité intérieure adaptée à la conicité de l'axe 13.

L'insertion de l'axe conique 13 dans la bague 12 a pour effet de dilater celle-ci, qui bloque alors par coincement l'extrémité bouclée 9₁ dans le logement qui la reçoit.

La conicité intérieure de la bague 12 améliore le coincement en ce qu'elle permet de répartir uniformément les efforts de serrage nécessaires au coincement, d'un bout à l'autre de l'extrémité bouclée.

La bague 12 isole en outre, lors du montage du pivot, la lame de ressort de l'axe conique 13, vis à vis d'efforts axiaux que ce dernier, seul, pourrait lui transmettre. De tels efforts axiaux seraient susceptibles de déplacer, déformer ou précontraindre la lame, au détriment de la reproductibilité des performances du pivot.

Les quatre extrémités bouclées des lames 8 et 9 peuvent ainsi être fixées dans le pivot suivant l'invention.

On a représenté à la figure 3 un deuxième mode de réalisation non-revendiqué, constituant une variante du pivot de la figure 2. Sur cette figure et les suivantes, des références numériques identiques, éventuellement affectées d'un "prime" ou d'un "seconde", à celles utilisées sur des figures précédentes repèrent des éléments ou organes identiques ou analogues. Le pivot de la figure 3 se distingue de celui de la figure 2 essentiellement en ce que les pièces 1 et 2 sont couplées par trois lames de ressort 8',9' et 14 et non deux seulement. Sur la vue éclatée de la figure 3, il apparaît qu'une lame centrale 14 de largeur axiale sensiblement double de celle des lames d'extrémité 8 et 9, est glissée dans le pivot entre ces dernières dont les parties planes sont sensiblement coplanaires et à 90° de celui de la lame centrale 14. Les extrémités de ces lames sont toutes fixées par coincement par des bagues telles que 12 et des axes tels que 13, non représentés pour la clarté de la figure. La lame 14, centrale, chevauche alors la partie médiane du pivot et donne à celui-ci une résistance accrue vis-à-vis d'efforts radiaux.

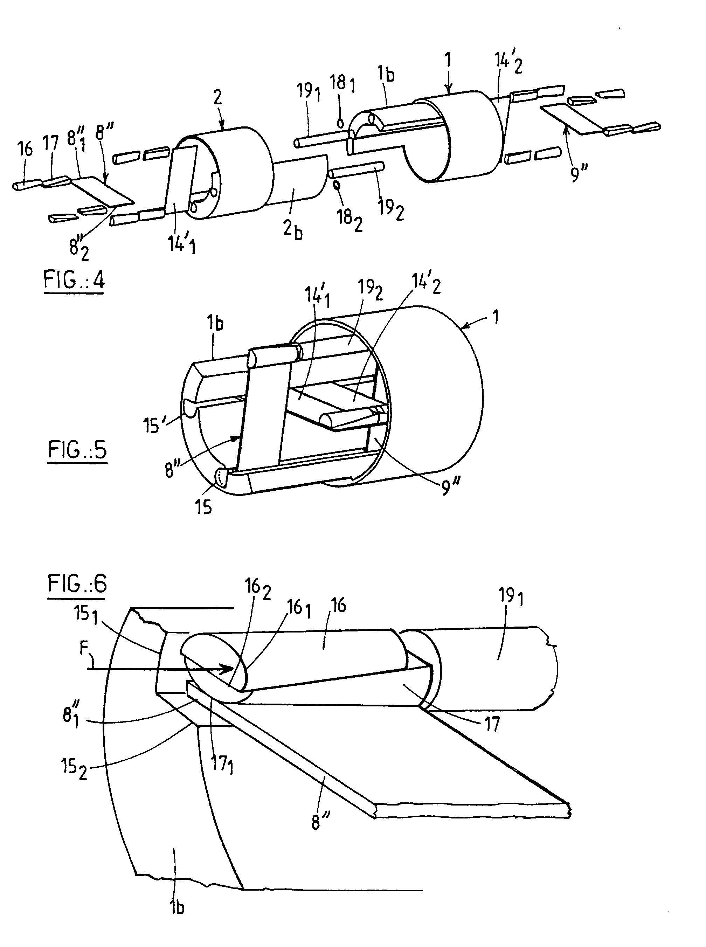

On se réfère maintenant aux figures 4 à 6 pour décrire un mode de réalisation du pivot suivant l'invention. Sur la vue éclatée de la figure 4 il apparaît que ce mode de réalisation comporte, comme celui de la figure 3, trois lames ou groupe de lames, 8", (14'₁, 14'₂) et 9" respectivement.

Sur la vue du pivot assemblé représenté à la figure 2, avec arrachement de la pièce 2, il apparaît que les deux lames centrale 14'₁, 14'₂ sont adjacentes et accolées. Elles sont donc équivalentes à une lame unique dont la largeur cumule celles des lames 14'₁, 14'₂ La division en deux parties de cette lame unique peut en faciliter la fabrication.

Les lames 8", (14'₁, 14'₂) et 9" sont parfaitement planes et se distinguent donc de celles des modes de réalisation des figures 1 à 3 par l'absence de boucles terminales.

Elles s'en distinguent encore par les moyens utilisés pour bloquer par coincement leurs extrémités dans les logements axiaux des pièces 1 et 2 qui les reçoivent. Ces moyens sont représentés en plus de détail à la figure 6, illustrant, à titre d'exemple, le coincement d'une extrémité 8"₁ de la lame 8" dans l'un (15₁) des deux logements axiaux 15, 15' de la pièce 1.

Sur cette figure il apparaît que le logement axial 15 comprend une paroi constituée d'une partie cylindrique 15₁ et d'une partie plane 15₂ sur laquelle s'appuie l'extrémité 8"₁ de la lame 8".

Pour bloquer l'extrémité de cette lame contre cette partie plane on utilise, suivant l'invention, des premier et deuxième coins superposés 16 et 17, respectivement, conformés pour coopérer en appliquant à la lame un serrage par "effet de coin".

Pour ce faire le coin 16 présente une partie de surface latérale cylindrique 16₁ sensiblement conforme à celle de la partie cylindrique 15₁ du logement 15 et une surface plane 16₂ inclinée sur l'axe de sa surface latérale cylindrique.

Le coin 17 est généralement conforme au coin 16 mais comprend en outre une deuxième surface plane 17₁ parallèle à l'axe de sa surface cylindrique. Cette deuxième surface plane est agencée pour venir s'appliquer contre la lame 8", comme représenté à la figure 6.

Pour procéder à l'assemblage des diverses pièces du pivot représentées à la figure 4, on emboîte tout d'abord les pièces 1 et 2 l'une dans l'autre, en plaçant leurs logements axiaux respectifs en alignement. On glisse ensuite dans ceux-ci les lames 14'₁, 14'₂ en interposant entre celles-ci deux fines rondelles 18₁, 18₂ empêchant tout frottement de leurs arêtes adjacentes. En variante, comme on l'a vu plus haut, ces deux lames 14'₁, 14'₂ pourraient être remplacées par une lame unique, de largeur double.

On glisse ensuite, dans les logements axiaux devant recevoir les extrémités des lames 8" et 9', des cales cylindriques 19₁, 19₂ utilisées, comme on le verra plus loin, pour mettre en place les coins.

On insère ensuite dans les logements axiaux les lames 8" et 9", puis les paires des coins respectives (16, 17), les coins de la paire étant en appui l'un sur l'autre par leurs faces planes inclinées sur les axes de leurs surfaces cylindriques. La longueur des cales 19₁, 19₂ est ajustée pour que, après mise en butée des lames 8", 9" et des coins 17 contre ces cales, les coins 16, 17 affleurent sensiblement aux débouchés des logements axiaux 15, 15'.

Une percussion exercée sur un coin 16 selon la flèche F (voir figure 6) alors que le coin correspondant disposé à l'autre extrémité du logement axial 15 est retenu par une butée dans ce logement, fait glisser le coin 16 sur le coin 17 jusqu'à ce que la surface cylindrique 16₁ du coin 16 soit arrêtée par celle (15₁) du logement axial. On remarquera que les surfaces planes en contact des coins 16, 17 sont alors inclinées sur l'axe de ce logement.

L'effet de coin dû au glissement l'une sur l'autre des surfaces planes des coins 16, 17 bloque alors l'extrémité 8"₁ de la lame 8" dans le logement axial 15, par serrage de cette extrémité contre la partie plane 15₂ de ce logement. On opère de même pour bloquer les autres extrémités des lames 8" et 9" et des lames 14'₁, 14'₂. Pour ces deux dernières lames il faut toutefois disposer d'outils de percussion dimensionnés pour pénétrer profondément dans les logements axiaux qui reçoivent ces lames.

Le pivot des figures 4 à 6 présente divers avantages. Il comprend tout d'abord des lames de ressort planes, plus faciles à fabriquer que les lames à boucles terminales des pivots des figures 1 à 3 et moins susceptibles d'être endommagées par le traitement thermique qu'elles doivent subir. Surtout, les tolérances dimensionnelles concernant ces lames peuvent être moins strictes, du fait que la surface d'appui 17₁ du coin 17 sur cette lame est écartée de l'extrémité de la lame, la longueur de celle-ci pouvant donc varier quelque peu sans affecter son blocage. Toutes ces caractéristiques permettent de fabriquer le pivot des figures 4 à 6 à coût réduit.

Diverses techniques de fabrication telles que le moulage ou l'électroérosion, par exemple, permettent de fabriquer les pièces 1 et 2 du pivot suivant l'invention, ces techniques étant appropriées à la réalisation de telles pièces, de forme relativement complexes.

Il apparaît maintenant que l'invention permet bien d'atteindre le but annoncé. En effet, la fixation par coincement des lames de ressort n'altère pas les caractéristiques mécaniques de ces lames, contrairement à la fixation par soudure, et est insensible au vieillissement ou aux contraintes d'environnement rencontrées dans l'espace, contrairement à la fixation par collage. On assure ainsi la production de pivots fiables et aux performances bien définies et stables. La simulation du comportement d'un tel pivot est alors plus aisée et permet d'en contrôler les performances plus étroitement et plus sûrement. Le mode de réalisation des figures 4 à 6 est, en outre, de fabrication particulièrement économique.

## Revendications

1. Pivot à liaisons flexibles comprenant des première et deuxième pièce identiques (1,2) partiellement engagées l'une dans l'autre et mobiles en rotation l'une par rapport à l'autre autour d'un axe commun (X), contre l'action d'au moins une lame (8",9") de ressort de rappel présentant des première et deuxième extrémités (8"₁,8"₂) ancrées dans lesdites première et deuxième pièces (1,2), respectivement,
**caractérisé en ce que** chacune des extrémités (8"₁, 8"₂) de ladite lame (8") est coincée dans un logement axial (15,15') prévu dans une desdites pièces (1,2), entre une partie de paroi (15₂) dudit logement (15) et une paire de coins superposés (16,17), serrés entre une autre partie de paroi (15₁) dudit logement et ladite lame (8").

2. Pivot conforme à la revendication 1, **caractérisé en ce que** ladite lame (8"), et ladite partie de paroi (15₂) dudit logement sur laquelle elle s'appuie, sont planes, et **en ce que** ladite autre partie de paroi (15₁) dudit logement et la partie de surface (16₁) de ladite paire de coins en appui sur elle sont cylindriques.

3. Pivot conforme à la revendication 2, **caractérisé en ce que** les coins (16,17) sont en appui l'un sur l'autre par deux faces planes en regard inclinées sur l'axe dudit logement axial (15,15').

4. Pivot conforme à la revendication 3, **caractérisé en ce qu'**un desdits coins (16,17) est en outre en butée contre une cale (19₁, 19₂) introduite dans ledit logement axial (15, 15').

5. Pivot conforme à l'une quelconque des revendications 1 à 4, **caractérisé en ce que** chacune desdites pièces (1;2) comprend une partie (1a,2a) cylindrique creusée d'un évidement sensiblement hémi-circulaire et une partie (1b,2b) constituant un pied glissé axialement dans l'évidement de l'autre pièce.

6. Pivot conforme à la revendication 5, **caractérisé en ce que** ledit pied (1b) comporte des surfaces de butée (4,5) agencées pour coopérer avec des surfaces de butée (6,7) de l'évidement dans lequel il est introduit, pour délimiter le débattement angulaire maximal relatif des deux pièces (1,2) l'une par rapport à l'autre.

7. Pivot conforme à l'une quelconque des revendications 1 à 6, **caractérisé en ce qu'**il comprend deux lames de ressort (8,9) disposées dans des plans croisés, préférablement perpendiculaires.

8. Pivot conforme à l'une quelconque des revendications 1 à 7, **caractérisé en ce qu'**il comprend des première (8"), deuxième (14'₁,14'₂) et troisième (9") lames de ressort, la deuxième (14'₁,14'₂) étant disposée entre les deux autres de manière à chevaucher la partie médiane du pivot.

## Patentansprüche

1. Gelenk mit flexiblen Verbindungen, das erste und zweite identische Teile (1, 2) aufweist, die teilweise ineinandergreifen und relativ zueinander um eine gemeinsame Achse (X) entgegen der Wirkung mindestens einer Rückstellblattfeder (8", 9") drehbar sind, die ein erstes und ein zweites Ende (8"₁, 8"₂) aufweist, welche in dem ersten bzw. dem zweiten Teil (1, 2) verankert sind,
**dadurch gekennzeichnet, daß** jedes der Enden (8"₁, 8"₂) des Blatts (8") in einer axialen Aufnahme (15, 15'), die in einem der Teile (1, 2) vorgesehen ist, zwischen einem Teil der Wand (15₂) der Aufnahme (15) und einem Paar von übereinander angeordneten Klemmkeilen (16, 17) geklemmt ist, die zwischen einem anderen Teil der Wand (15₁) der Aufnahme und dem Blatt (8") verkeilt sind.

2. Gelenk nach Anspruch 1, **dadurch gekennzeichnet, daß** das Blatt (8") und der Teil der Wand (15₂) der Aufnahme, an dem es sich abstützt, eben sind, und daß der andere Teil der Wand (15₁) der Aufnahme und der sich darauf abstützende Teil der Fläche (16₁) des Klemmkeilpaars zylindrisch sind.

3. Gelenk nach Anspruch 2, **dadurch gekennzeichnet, daß** die Klemmkeile (16, 17) über zwei einander zugewandte, in bezug auf die Achse der axialen Ausnehmung (15, 15') schräge Flächen aneinander abgestützt sind.

4. Gelenk nach Anspruch 3, **dadurch gekennzeichnet, daß** einer der Klemmkeile (16, 17) ferner an einem Keilstift (19₁, 19₂) anliegt, der in die axiale Aufnahme (15, 15') eingesetzt ist.

5. Gelenk nach einem der Ansprüche 1 bis 4, **dadurch gekennzeichnet, daß** jedes der Teile (1; 2) einen zylindrischen Bereich (1a, 2a), der eine im wesentlichen halbzylindrische Ausnehmung aufweist, und einen Bereich (1b, 2b) aufweist, der einen axial in die Aufnahme des anderen Teils eingeschobenen Fuß bildet.

6. Gelenk nach Anspruch 5, **dadurch gekennzeichnet, daß** der Fuß (1b) Anschlagflächen (4, 5) aufweist, die zum Zusammenwirken mit den Anschlagflächen (6, 7) der Ausnehmung, in welche er eingesetzt ist, ausgebildet sind, um den maximalen relativen Winkelweg der beiden Teile (1; 2) in bezug zueinander zu begrenzen.

7. Gelenk nach einem der Ansprüche 1 bis 6, **dadurch gekennzeichnet, daß** es zwei Blattfedern (8, 9) in sich kreuzenden, vorzugsweise zueinander senkrechten Ebenen aufweist.

8. Gelenk nach einem der Ansprüche 1 bis 7, **dadurch gekennzeichnet, daß** es eine erste (8"), eine zweite (14'₁, 14'₂) und eine dritte (9") Blattfeder aufweist, wobei die zweite (14'₁, 14'₂) zwischen den beiden anderen derart angeordnet ist, daß sie den Mittelteil des Gelenks übergreift.

## Claims

1. A pivot with flexible connections including identical first and second members (1, 2) partly engaged in each other and rotatable relative to each other about a common axis (X) against the action of a return leaf spring (8", 9") having first and second ends (8"₁, 8"₂) anchored in said first and second members (1, 2), respectively,
**characterized in that** each of said ends (8"₁, 8"₂) of said leaf spring (8") is wedged in an axial housing (15, 15') provided in one of said members (1, 2), between a wall portion (15₂) of said housing (15) and a pair of superposed wedges (16, 17) gripped between another wall portion (15₁) of said housing and said leaf spring (8").

2. The pivot claimed in claim 1, **characterized in that** said leaf spring (8") and said wall portion (15₂) of said housing on which it bears are flat and said other wall portion (15₁) of said housing and said surface portion (16₁) of said pair of wedges bearing on it are cylindrical.

3. The pivot claimed in claim 2, **characterized in that** said wedges (16, 17) bear on each other through two facing flat faces inclined to the axis of said axial housing (15, 15').

4. The pivot claimed in claim 3, **characterized in that** one of said wedges (16, 17) also abuts against a key (19₁, 19₂) inserted into said axial housing (15, 15').

5. The pivot claimed in any of claims 1 to 4, **characterized in that** each member (1, 2) has a cylindrical portion (1a, 2a) with a substantially semicylindrical recess and a portion (1b, 2b) constituting a foot slid axially into said recess of the other member.

6. The pivot claimed in claim 5, **characterized in that** said foot (1b) has abutment surfaces (4, 5) adapted to cooperate with abutment surfaces (6, 7) of the housing into which it is inserted to delimit the maximum relative angular movement of said two members (1, 2) relative to each other.

7. The pivot claimed in any of claims 1 to 6, **characterized in that** it comprises two leaf springs (8, 9) in crossed, preferably perpendicular, planes.

8. The pivot claimed in any of claims 1 to 7, **characterized in that** it comprises first (8"), second (14'₁, 14'₂) and third (9") leaf springs, said second leaf spring (14'₁, 14'₂) being disposed between the other two leaf springs so as to straddle a middle part of said pivot.
